# EUROPEAN PATENT SPECIFICATION

(11) **EP 2 831 215 B1**
(45) Date of publication and mention of the grant of the patent: **08.08.2018**
(21) Application number: 13717606.1
(22) Date of filing: 22.03.2013
(51) Int. Cl.: C11D 3/20, C11D 3/386, C08J 5/18, C11D 17/04

(54) **USE OF ENZYMES FOR PREPARING WATER SOLUBLE FILMS**
VERWENDUNG VON ENZYMEN ZUR HERSTELLUNG VON WASSERLÖSLICHEN FOLIEN
UTILISATION D'ENZYMES POUR LA PREPARATION DE FILMS SOLUBLES DANS L'EAU

(30) Priority: 29.03.2012 US 201261617321 P
(43) Date of publication of application: 04.02.2015
(73) Proprietor: Novozymes A/S, 2880 Bagsvaerd (DK); Novozymes North America, Inc., Franklinton, NC 27525 (US)
(72) Inventor: CASELLA, Victor, Raleigh, North Carolina 27616 (US); SIMONSEN, Ole, DK-2860 Soeborg (DK)
(74) Representative: NZ EPO Representatives
(86) International application number: PCT/US2013/033442
(87) International publication number: WO 2013/148492

(56) References cited:
- DE-A1- 10 053 329
- US-A- 4 115 292
- US-A- 4 176 079

## Description

### BACKGROUND OF THE INVENTION

### Field of the Invention

The present invention relates to the use of specific enzyme formulations for preparing enzymatic water soluble films.

### Background

The use of water-soluble film packages to deliver unit dosage amounts of detergents products for e.g. laundry and automatic dish wash is well known. Both granular and liquid detergents have been on the market in this form for several years. It is also well known for decades to use enzymes in laundry detergents. During the years more and more different types of enzymes are used in detergents, and the dosages of the enzymes is also increasing, amongst others due to the benefits coming from the enzymes and the environmental benefits of using biological actives instead of e.g. oil based chemicals like most surfactants.

A problem for the use of enzyme in detergents is the storage stability of the enzymes. Enzymes are large biological molecules that can undergo various forms of degradation. To overcome this problem numerous solutions have been suggested and patented, involving both designing more robust enzymes, and making detergent formulations less harsh to the enzymes. For unit dose systems like detergent pouches or tablets it is often useful to separate the enzymes from more harsh chemicals (e.g., bleach) in different compartments or layers. However, this is complicating the manufacturing processes and increases the cost. It has previously been suggested to incorporate the enzymes into the water-soluble film surrounding a detergent pouch (e.g., US 4,115,292). Also US 4,176,079 discloses a water-soluble enzyme-containing article (for example a film/sheet) for use in detergents. However, using the standard liquid enzyme formulations on the market sets a limit to the amount of enzyme you can incorporate, due to the solvents used in the formulations. Especially the wide use of polyols in liquid enzyme formulations limits the use, as it also acts as a plasticizer from the film. Too high amounts of plasticizer make the film unsuitable for detergent pouches, and too high amounts of water in the feed makes the casting of the film difficult or impossible. There is thus a need to be able to increase the enzyme content of water soluble films without jeopardizing the film properties.

### SUMMARY OF THE INVENTION

In a first aspect, the inventors of the present invention have provided the use of a liquid enzyme formulation comprising more than 5% (w/w) active enzyme protein and a ratio of polyol to active enzyme of less than 10, for preparing an enzymatic water soluble film, wherein the polyol has less than 10 carbons and a molecular weight less than 500 g/mol.

In another aspect, the invention provides a method for preparing a detergent unit dose product, comprising:
a) forming an enzymatic water soluble film from a liquid enzyme formulation comprising more than 5% (w/w) active enzyme protein and a ratio of polyol to active enzyme of less than 10, wherein the polyol has less than 10 carbons and a molecular weight less than 500 g/mol; and
b) encapsulating a laundry or dish wash detergent unit dose in the enzymatic water soluble film.

Various embodiments are apparent from the detailed description, examples and claims.

### DETAILED DESCRIPTION OF THE INVENTION

### Liquid enzyme formulation

The liquid enzyme formulation used in the present invention includes less than 10% polyol (polyhydric alcohol) per percent of active enzyme, i.e. the weight ratio of polyol to active enzyme is less than 10. Preferably, the weight ratio of polyol to active enzyme is less than 9, more preferably less than 8, more preferably less than 7, more preferably less than 6, more preferably less than 5, more preferably less than 4, most preferably less than 3, and in particular less than 2.

Further, the liquid enzyme formulation includes more than 5% (w/w) active enzyme protein; preferably more than 6%, more preferably more than 8%, more preferably more than 10%, more preferably more than 12%, more preferably more than 15%, even more preferably more than 20%, and most preferably more than 25% (w/w) active enzyme protein.

The liquid enzyme formulation may include other formulation ingredients well-known in the art, such as, water, alkali metal salt(s) (e.g., NaCI), calcium salt(s) (e.g., CaCl₂), sulphate(s), phosphate(s), surfactant(s) (e.g., anionic and nonionic surfactants), enzyme stabilizers, etc.

### Enzymes

The enzyme(s) comprised in the liquid enzyme formulation of the invention include one or more enzymes such as a protease, lipase, cutinase, amylase, carbohydrase, cellulase, pectinase, mannanase, arabinase, galactanase, xylanase, oxidase, e.g., laccase, peroxidase and/or haloperoxidase.

Cellulases: Suitable cellulases include those of bacterial or fungal origin. Chemically modified or protein engineered mutants are included. Suitable cellulases include cellulases from the genera *Bacillus, Pseudomonas, Humicola, Fusarium, Thielavia, Acremonium, e.g.,* the fungal cellulases produced from *Humicola insolens, Myceliophthora thermophila* and *Fusarium oxysporum* disclosed in US 4,435,307, US 5,648,263, US 5,691,178, US 5,776,757 and WO 89/09259.

Especially suitable cellulases are the alkaline or neutral cellulases having color care benefits. Examples of such cellulases are cellulases described in EP 0 495 257, EP 0 531 372, WO 96/11262, WO 96/29397, WO 98/08940. Other examples are cellulase variants such as those described in WO 94/07998, EP 0 531 315, US 5,457,046, US 5,686,593, US 5,763,254, WO 95/24471, WO 98/12307 and PCT/DK98/00299.

Commercially available cellulases include Celluzyme™, and Carezyme™ (Novozymes A/S), Clazinase™, and Puradax HA™ (Genencor International Inc.), and KAC-500(B)™ (Kao Corporation).

Proteases: Suitable proteases include those of animal, vegetable or microbial origin. Microbial origin is preferred. Chemically modified or protein engineered mutants are included. The protease may be a serine protease or a metalloprotease, preferably an alkaline microbial protease or a trypsin-like protease. Examples of alkaline proteases are subtilisins, especially those derived from *Bacillus, e.g.,* subtilisin Novo, subtilisin Carlsberg, subtilisin 309, subtilisin 147 and subtilisin 168 (described in WO 89/06279). Examples of trypsin-like proteases are trypsin (*e.g*., of porcine or bovine origin) and the *Fusarium* protease described in WO 89/06270 and WO 94/25583.

Examples of useful proteases are the variants described in WO 92/19729, WO 98/20115, WO 98/20116, and WO 98/34946, especially the variants with substitutions in one or more of the following positions: 27, 36, 57, 76, 87, 97, 101, 104, 120, 123, 167, 170, 194, 206, 218, 222, 224, 235, and 274.

Preferred commercially available protease enzymes include Alcalase™, Savinase™, Primase™, Duralase™, Esperase™, and Kannase™ (Novozymes A/S), Maxatase™, Maxacal™, Maxapem™, Properase™, Purafect™, Purafect OxP™, FN2™, and FN3™ (Genencor International Inc.).

Lipases and Cutinases: Suitable lipases and cutinases include those of bacterial or fungal origin. Chemically modified or protein engineered mutants are included. Examples include lipase from *Thermomyces, e.g.,* from *T. lanuginosus* (previously named *Humicola lanuginosa)* as described in EP 258 068 and EP 305 216, cutinase from *Humicola, e.g. H. insolens* as described in WO 96/13580, a *Pseudomonas* lipase, *e.g.,* from *P. alcaligenes* or *P*. *pseudoalcaligenes* (EP 218 272), *P. cepacia* (EP 331 376), *P. stutzeri* (GB 1,372,034), *P*. *fluorescens, Pseudomonas sp.* strain SD 705 (WO 95/06720 and WO 96/27002), P. *wisconsinensis* (WO 96/12012), a *Bacillus* lipase, *e.g.,* from *B*. *subtilis* (Dartois et al., 1993, Biochemica et Biophysica Acta, 1131: 253-360), *B*. *stearothermophilus* (JP 64/744992) or *B*. *pumilus* (WO 91/16422).

Other examples are lipase variants such as those described in WO 92/05249, WO 94/01541, EP 407 225, EP 260 105, WO 95/35381, WO 96/00292, WO 95/30744, WO 94/25578, WO 95/14783, WO 95/22615, WO 97/04079, WO 97/07202, WO 00/060063, WO2007/087508 and WO 2009/109500.

Preferred commercially available lipase enzymes include Lipolase™, Lipolase Ultra™, and Lipex™; Lecitase™, Lipolex™; Lipoclean™, Lipoprime™ (Novozymes A/S). Other commercially available lipases include Lumafast (Genencor Int Inc); Lipomax (Gist-Brocades/Genencor Int Inc) and Bacillus sp lipase from Solvay.

Amylases: Suitable amylases (α and/or β) include those of bacterial or fungal origin. Chemically modified or protein engineered mutants are included. Amylases include, for example, α-amylases obtained from *Bacillus, e.g*., a special strain of *Bacillus licheniformis,* described in more detail in GB 1,296,839.

Examples of useful amylases are the variants described in WO 94/02597, WO 94/18314, WO 96/23873, and WO 97/43424, especially the variants with substitutions in one or more of the following positions: 15, 23, 105, 106, 124, 128, 133, 154, 156, 181, 188, 190, 197, 202, 208, 209, 243, 264, 304, 305, 391, 408, and 444.

Commercially available amylases are Duramyl™, Termamyl™, Fungamyl™ and BAN™ (Novozymes A/S), Rapidase™ and Purastar™ (from Genencor International Inc.).

Oxidases: Suitable oxidases (or oxidoreductases) include various sugar oxidases, laccases, peroxidases and haloperoxidases.

### Polyol

A polyol (or polyhydric alcohol) used according to the invention is an alcohol with two or more hydroxyl groups. The polyol typically includes less than 10 carbons, such as 9, 8, 7, 6, 5, 4, or 3 carbons. The molecular weight is typically less than 500 g/mol, such as 400 g/mol or 300 g/mol.

Examples of suitable polyols include, but are not limited to, glycerol, propylene glycol, ethylene glycol, sorbitol, mannitol, erythritol, dulcitol, inositol, xylitol and adonitol.

Generally, the liquid enzyme formulations of the invention include less than 10% (w/w) polyol (polyhydric alcohol) per percent of active enzyme, i.e. the weight ratio of polyol to active enzyme is less than 10. Preferably, the weight ratio of polyol to active enzyme is less than 9, more preferably less than 8, more preferably less than 7, more preferably less than 6, more preferably less than 5, more preferably less than 4, most preferably less than 3, and in particular less than 2.

In an embodiment, the amount of polyol(s) in the liquid enzyme formulation is less than 50% (w/w), preferably less than 40% (w/w), more preferably less than 30% (w/w), even more preferably less than 20% (w/w), and most preferably less than 10% (w/w). In another embodiment, the liquid enzyme formulation does not contain polyol.

### Water soluble film

The water soluble film, according to the invention, is made of water soluble polymeric materials which are formed into a film or sheet. The water soluble polymeric material can, for example, be obtained by casting, blow-molding, extrusion or blown extrusion of the polymeric material, as known in the art.

Preferred polymers, copolymers or derivatives thereof suitable for use as water soluble polymeric material are selected from polyvinyl alcohols, polyvinyl pyrrolidone, polyalkylene oxides, acrylamide, acrylic acid, cellulose, cellulose ethers, cellulose esters, cellulose amides, polyvinyl acetates, polycarboxylic acids and salts, polyaminoacids or peptides, polyamides, polyacrylamide, copolymers of maleic/acrylic acids, polysaccharides including starch and gelatine, natural gums such as xanthum and carragum. More preferred polymers are selected from polyacrylates and water-soluble acrylate copolymers, methylcellulose, carboxymethylcellulose sodium, dextrin, ethylcellulose, hydroxyethyl cellulose, hydroxypropyl methylcellulose, maltodextrin, polymethacrylates, and most preferably selected from polyvinyl alcohols, polyvinyl alcohol copolymers and hydroxypropyl methyl cellulose (HPMC), and combinations thereof.

Preferably, the film includes polyvinyl alcohol (PVA), alone or in combination with at least one additional polymer. Examples of an additional polymer include a cellulosic polymer, starch, polyvinyl pyrrolidone (PVP), polyethylene oxide (PEO), an alginate, a pectin, or combinations thereof. PVA can be used in the films to improve film strength and/or to vary and slow dissolution times. In a preferred embodiment, the film includes PVA without any added plasticizers. For example, the film can include both PVA, which provides strength to the film and PEO, which provides flexibility to the film and may obviate the need for a plasticizer.

PVA can be used in varying amounts depending upon the product application and characteristics desired. For example, in general, a larger amount of PVA will increase film strength and increase dissolution time. For films that require high active dosing, PVA can be used effectively at minimum amount of 0.5, preferably 1%, more preferably 5%, by weight of the film, to improve film strength. The PVA can be effectively used at a maximum amount, for example, 80%, preferably 50%, more preferably 25% by weight of the film. For slowing dissolution time, PVA can be used at levels as high as 80%. A film containing an enzyme can be coated on one or both surfaces with a PVA containing layer to modify the dissolution of the film and the release of the enzyme from the film.

The polymer can have any weight average molecular weight, preferably from 1000 to 1,000,000, more preferably from 10,000 to 300,000 yet more preferably from 20,000 to 150,000.

Mixtures of polymers can also be used as the water soluble polymeric material. This can be beneficial to control the mechanical and/or dissolution properties of the compartments or water soluble polymeric material, depending on the application thereof and the required needs. Suitable mixtures include for example mixtures wherein one polymer has a higher water-solubility than another polymer, and/or one polymer has a higher mechanical strength than another polymer. Also suitable are mixtures of polymers having different weight average molecular weights, for example a mixture of PVA or a copolymer thereof of a weight average molecular weight of 10,000-40,000, preferably around 20,000, and of PVA or copolymer thereof, with a weight average molecular weight of 100,000 to 300,000, preferably around 150,000.

Also suitable herein are polymer blend compositions, for example comprising hydrolytically degradable and water-soluble polymer blends such as polylactide and polyvinyl alcohol, obtained by mixing polylactide and polyvinyl alcohol, typically comprising 1-35% by weight polylactide and 65% to 99% by weight polyvinyl alcohol.

Preferred for use herein are polymers which are from 60% to 98% hydrolysed, preferably 80% to 90% hydrolysed, to improve the dissolution characteristics of the material.

Most preferred water soluble polymeric materials are PVA films known under the trade reference MonoSol M8630, as sold by MonoSol LLC of Merrillville, Indiana, US; and PVA films of corresponding solubility and deformability characteristics. Other films suitable for use herein include films known under the trade reference PT film or the K-series of films supplied by Aicello, or VF-HP film supplied by Kuraray.

The water soluble film can contain other auxiliary agents and processing agents, such as, but not limited to, plasticizers, lubricants, release agents, fillers, extenders, antiblocking agents, antioxidants, detackifying agents, antifoams, nanoparticles such as layered silicate-type nanoclays (e.g., sodium montmorillonite), bleaching agents (e.g., sodium metabisulfite, sodium bisulfite or others), and other functional ingredients, in amounts suitable for their intended purposes. The amount of such agents can be up to 50% (w/w), up to 20% (w/w), or up to 15% (w/w), or up to 10% (w/w), or up to 5% (w/w), e.g., up to 4% (w/w), individually or collectively. Embodiments including plasticizers are preferred; however, adding too much plasticizer may cause the film composition to become tacky and unsuitable for use.

The plasticizer can include, but is not limited to, glycerin, diglycerin, sorbitol, ethylene glycol, diethylene glycol, triethylene glycol, tetraethylene glycol, propylene glycol, polyethylene glycols up to 400 MW, neopentyl glycol, trimethylolpropane, polyether polyols, 2-methyl-1,3-propanediol, ethanolamines, and a mixture thereof. A preferred plasticizer is glycerin, sorbitol, triethyleneglycol, propylene glycol, 2-methyl-1,3-propanediol, trimethylolpropane, or a combination thereof. The total amount of the plasticizer can be in a range of 10% (w/w) to 40% (w/w), or 15% (w/w) to 35% (w/w), or 20% (w/w) to 30% (w/w), for example 25% (w/w). Combinations of glycerin, propylene glycol, and sorbitol can be used. Optionally, glycerin can be used in an amount of 5% (w/w) to 30% (w/w), or 5% (w/w) to 20% (w/w), e.g., 13% (w/w). Optionally, propylene glycol can be used in an amount of 1% (w/w) to 20% (w/w), or 3% (w/w) to 10% (w/w), for example 6% (w/w). Optionally, sorbitol can be used in an amount of 1% (w/w) to 20% (w/w), or 2% (w/w) to 10% (w/w), e.g., 5% (w/w).

Suitable surfactants can include the nonionic, cationic, anionic and zwitterionic classes. Preferably, the surfactants will be of the nonionic, cationic or zwitterionic classes or combinations of these. Suitable surfactants include, but are not limited to, polyoxyethylenated polyoxypropylene glycols, alcohol ethoxylates, alkylphenol ethoxylates, tertiary acetylenic glycols and alkanolamides (nonionics), polyoxyethylenated amines, quaternary ammonium salts and quaternized polyoxyethylenated amines (cationics), and amine oxides, N-alkylbetaines and sulfobetaines (zwitterionics). Preferred surfactants are alcohol ethoxylates, quaternary ammonium salts and amine oxides. In one type of embodiment, the amount of surfactant in the water-soluble film is in a range of 1.0% (w/w) to 2.5% (w/w), optionally 1.0% (w/w) to 2.0% (w/w).

Suitable lubricants/release agents can include, but are not limited to, fatty acids and their salts, fatty alcohols, fatty esters, fatty amines, fatty amine acetates and fatty amides. Preferred lubricants/release agents are fatty acids, fatty acid salts, and fatty amine acetates. In one type of embodiment, the amount of lubricant/release agent in the water-soluble film is in a range of 0.02% (w/w) to 1.5% (w/w), optionally 0.1% (w/w) to 1% (w/w).

Suitable fillers/extenders/antiblocking agents/detackifying agents include, but are not limited to, starches, modified starches, crosslinked polyvinylpyrrolidone, crosslinked cellulose, microcrystalline cellulose, silica, metallic oxides, calcium carbonate, talc and mica. Preferred materials are starches, modified starches and silica. In one type of embodiment, the amount of filler/extender/antiblocking agent/detackifying agent in the water-soluble film is in a range of 0.1% (w/w) to 25% (w/w), or 1% (w/w) to 10% (w/w), or 2% (w/w) to 8% (w/w), or 3% (w/w) to 5% (w/w). In the absence of starch, one preferred range for a suitable filler/extender/antiblocking agent/detackifying agent is 1% (w/w) to 6% (w/w), or 1% (w/w) to 4% (w/w), or 1% (w/w) to 2.5% (w/w).

Suitable antifoams include, but are not limited to, those based on polydimethylsiloxanes and hydrocarbon blends. In one type of embodiment, the amount of antifoam in the water-soluble film is in a range of 0.001% (w/w) to 1.0% (w/w), or 0.1% (w/w) to 0.75% (w/w), or 0.1% (w/w) to 0.6% (w/w), or 0.4% (w/w) to 0.5% (w/w).

The water-soluble film can further have a residual moisture content of at least 4% (w/w), for example in a range of 4 to 10% (w/w), as measured by Karl Fischer titration.

### Forming unit dose products out of water soluble polymeric materials

A unit dose product is the packaging of a single dose in a non-reusable container. It is increasingly used in detergents for laundry and dish wash. A detergent unit dose product is the packaging (*e.g*., in a pouch made from a water soluble film) of the amount of detergent used for a single wash.

The formation of unit dose products, made from a water soluble film, requires only one moving endless surface. Each unit dose product is formed in a single mold. After the web of water soluble polymeric material is placed onto the molds, each water soluble polymeric material is partially filled, closed and sealed. Sealing steps may be by means of solvent sealing, heat sealing or both.

The process used herein for forming the first and/or second moving webs involves continuously feeding a water-soluble material onto an endless surface, preferably onto a horizontal or substantially horizontal portion of an endless surface, or otherwise, onto a non-horizontal portion of this surface, such that it moves continuously towards and eventually onto the horizontal or substantially horizontal portion of the surface.

In a preferred embodiment for making both the first and second moving webs a portion of the endless surface will move continuously in horizontal rectilinear motion, until it rotates around an axis perpendicular to the direction of motion, typically about 180 degrees, and then move in the opposite direction, usually again in horizontal rectilinear motion. Eventually, the surface will rotate again to reach its initial position. In other embodiments, the surface moves in curvilinear, for example circular motion, whereby at least a portion of the surface is substantially horizontal for a simple but finite period of time. Where employed, such embodiments are mainly valuable for making the second moving web.

The term 'endless surface' as used herein, means that the surface is endless in one dimension at least, preferably only in one dimension. For example, the surface is preferably part of a rotating platen conveyer belt comprising molds such as that shown in FIG. 2, as described below in more detail.

The horizontal or substantially horizontal portion of the surface can have any width, typically depending on the number of rows of molds across the width, the size of the molds and the size of the spacing between molds. Where designed to operate in horizontal rectilinear manner the horizontal portion of the endless surface can have any length, typically depending on the number of process steps required to take place on this portion of the surface (during the continuous horizontal motion of the surface), on the time required per step and on the optimum speed of the surface needed for these steps.

Preferred may be that the width of the surface is up to 1.5 meters, or even up to 1.0 meters or preferably between 30 and 60 cm. Preferred may be that the horizontal portion of the endless surface is from 2 to 20 meters, or even 4 to 12 meters or even from 6 to 10 or even 9 meters.

The surface is typically moved with a constant speed throughout the process, which can be any constant speed. Preferred may be speeds of between 1 and 80 m/min, or even 10 to 60 m/min or even from 20 to 50 m/min or even 30 to 40 m/min.

The process is preferably done on an endless surface which has a horizontal motion for such a time to allow formation of the web of water soluble polymeric material, filling of the water soluble polymeric material, superposition of a second web of water soluble polymeric material, sealing of the two webs of water soluble polymeric material and cutting to separate the superposed webs into a plurality of unit dose products. Then, unit dose products are removed from the surface and the surface will rotate around an axis perpendicular to the direction of motion, typically about 180 degrees, to then move in opposite direction, typically also horizontally, to then rotate again, where after step a) starts again.

Preferably, the surface is part of and/or preferably removably connected to a moving, rotating belt, for example a conveyer belt or platen conveyer belt. Then preferably, the surface can be removed and replaced with another surface having other dimensions or comprising molds of a different shape or dimension. This allows the equipment to be cleaned easily and moreover to be used for the production of different types of pouches. This may for example be a belt having a series of platens, whereof the number and size will depend on the length of the horizontal portion and diameter of turning cycles of the surface, for example having 50 to 150 or even 60 to 120 or even 70 to 100 platens, for example each having a length (direction of motion of platen and surface) of 5 to 150 cm, preferably 10 to 100 cm or even 20 to 45 cm.

The platens then form together the endless surface or part thereof and typically the molds are comprised on the surface of the platens, for example each platen may have a number of molds, for example up to 20 molds in the direction of the width, or even from 2 to 10 or even 3 to 8, and for example up to 15 or even 1 to 10 or even 2 to 6 or even 2 to 5 molds lengthwise, i.e. in the direction of motion of the platens.

The surface, or typically the belt connected to the surface, can be continuously moved by use of any known method. Preferred is the use of a zero-elongation chain system, which drives the surface or the belt connected to the surface.

If a platen conveyer belt is used, this preferably contains a) a main belt (preferably of steel) and b) series of platens, which comprise 1) a surface with molds, such that the platens form the endless surface with molds described above, and 2) a vacuum chute connection and 3) preferably a base plate between the platens and the vacuum chute connection. Then, the platens are preferably mounted onto the main belt such that there is no air leakage from junctions between platens. The platen conveyer belt as a whole moves then preferably along (over; under) a static vacuum system (vacuum chamber).

Preferred may be that the surface is connected to 2 or more different vacuum systems, which each provide a different under pressure and/or provide such an under pressure in shorter or longer time-span or for a shorter or longer duration. For example, it may be preferred that a first vacuum system provides a under-pressure continuously on the area between or along the molds/edges and another system only provides a vacuum for a certain amount of time, to draw the material into the molds. For example, the vacuum drawing the material into the mold can be applied only for 0.2 to 5 seconds, or even 0.3 to 3 or even 2 seconds, or even 0.5 to 1.5 seconds, once the material is on the horizontal portion of the surface. This vacuum may preferably be such that it provides an under-pressure of between -100 mbar to -1000 mbar, or even from -200 mbar to -600 mbar.

The molds can have any shape, length, width and depth, depending on the required dimensions of the pouches. Per surface, the molds can also vary of size and shape from one to another, if desirable. For example, it may be preferred that the volume of the final pouches is between 5 and 300 ml, or even 10 and 150 ml or even 20 and 100 ml or even up to 80 ml and that the mold sizes are adjusted accordingly

### Detergent

The detergent, or detergent composition, of the invention may be a laundry detergent or a dish wash detergent composition. Preferably, the detergent composition is a liquid detergent composition.

The detergent composition may comprise one or more surfactants, which may be anionic and/or cationic and/or non-ionic and/or semi-polar and/or zwitterionic, or a mixture thereof. In a particular embodiment, the detergent composition includes a mixture of one or more nonionic surfactants and one or more anionic surfactants. The surfactant(s) is typically present at a level of from about 0.1% to 60% by weight, such as about 1% to about 40%, or about 3% to about 20%, or about 3% to about 10%. The surfactant(s) is chosen based on the desired cleaning application, and includes any conventional surfactant(s) known in the art.

When included therein the detergent will usually contain from about 1% to about 40% by weight, such as from about 5% to about 30%, including from about 5% to about 15%, or from about 20% to about 25% of an anionic surfactant. Non-limiting examples of anionic surfactants include sulfates and sulfonates, in particular, linear alkylbenzenesulfonates (LAS), isomers of LAS, branched alkylbenzenesulfonates (BABS), phenylalkanesulfonates, alpha-olefinsulfonates (AOS), olefin sulfonates, alkene sulfonates, alkane-2,3-diylbis(sulfates), hydroxyalkanesulfonates and disulfonates, alkyl sulfates (AS) such as sodium dodecyl sulfate (SDS), fatty alcohol sulfates (FAS), primary alcohol sulfates (PAS), alcohol ethersulfates (AES or AEOS or FES, also known as alcohol ethoxysulfates or fatty alcohol ether sulfates), secondary alkanesulfonates (SAS), paraffin sulfonates (PS), ester sulfonates, sulfonated fatty acid glycerol esters, alpha-sulfo fatty acid methyl esters (alpha-SFMe or SES) including methyl ester sulfonate (MES), alkyl- or alkenylsuccinic acid, dodecenyl/tetradecenyl succinic acid (DTSA), fatty acid derivatives of amino acids, diesters and monoesters of sulfo-succinic acid or soap, and combinations thereof.

When included therein the detergent will usually contain from about 0.2% to about 40% by weight of a non-ionic surfactant, for example from about 0.5% to about 30%, in particular from about 1% to about 20%, from about 3% to about 10%, such as from about 3% to about 5%, or from about 8% to about 12%. Non-limiting examples of non-ionic surfactants include alcohol ethoxylates (AE or AEO), alcohol propoxylates, propoxylated fatty alcohols (PFA), alkoxylated fatty acid alkyl esters, such as ethoxylated and/or propoxylated fatty acid alkyl esters, alkylphenol ethoxylates (APE), nonylphenol ethoxylates (NPE), alkylpolyglycosides (APG), alkoxylated amines, fatty acid monoethanolamides (FAM), fatty acid diethanolamides (FADA), ethoxylated fatty acid monoethanolamides (EFAM), propoxylated fatty acid monoethanolamide (PFAM), polyhydroxy alkyl fatty acid amides, or N-acyl N-alkyl derivatives of glucosamine (glucamides, GA, or fatty acid glucamide, FAGA), as well as products available under the trade names SPAN and TWEEN, and combinations thereof.

The detergent composition may contain about 0-65% by weight of a detergent builder or co-builder, or a mixture thereof. In a dish wash detergent, the level of builder is typically 40-65%, particularly 50-65%. The builder and/or co-builder may particularly be a chelating agent that forms water-soluble complexes with Ca and Mg. Any builder and/or co-builder known in the art for use in laundry detergents may be utilized. Non-limiting examples of builders include zeolites, diphosphates (pyrophosphates), triphosphates such as sodium triphosphate (STP or STPP), carbonates such as sodium carbonate, soluble silicates such as sodium metasilicate, layered silicates (e.g., SKS-6 from Hoechst), ethanolamines such as 2-aminoethan-1-ol (MEA), iminodiethanol (DEA) and 2,2',2"-nitrilotriethanol (TEA), and carboxymethylinulin (CMI), and combinations thereof.

The detergent composition may contain 0-50% by weight of a bleaching system. Any bleaching system known in the art for use in laundry detergents may be utilized. Suitable bleaching system components include bleaching catalysts, photobleaches, bleach activators, sources of hydrogen peroxide such as sodium percarbonate and sodium perborates, preformed peracids and mixtures thereof. Suitable preformed peracids include, but are not limited to, peroxycarboxylic acids and salts, percarbonic acids and salts, perimidic acids and salts, peroxymonosulfuric acids and salts, for example, Oxone (R), and mixtures thereof. Non-limiting examples of bleaching systems include peroxide-based bleaching systems, which may comprise, for example, an inorganic salt, including alkali metal salts such as sodium salts of perborate (usually mono- or tetra-hydrate), percarbonate, persulfate, perphosphate, persilicate salts, in combination with a peracid-forming bleach activator. By Bleach activator is meant herin a compound which reacts with peroxygen bleach like hydrogen peroxide to form a Peracid. The peracid thus formed constitutes the activated bleach. Suitable bleach activators to be used herin include those belonging to the class of esters amides, imides or anhydrides, Suitable examples are tetracetyl athylene diamine (TAED), sodium 3,5,5 trimethyl hexanoyloxybenzene sulphonat, diperoxy dodecanoic acid, 4-(dodecanoyloxy)benzenesulfonate (LOBS), 4-(decanoyloxy)benzenesulfonate, 4-(decanoyloxy)benzoate (DOBS), 4-(3,5,5-trimethylhexanoyloxy)benzenesulfonate (ISONOBS), tetraacetylethylenediamine (TAED) and 4-(nonanoyloxy)benzenesulfonate (NOBS), and/or those disclosed in WO98/17767. A particular family of bleach activators of interest was disclosed in EP624154 and particulary preferred in that family is acetyl triethyl citrate (ATC). ATC or a short chain triglyceride like Triacin has the advantage that it is environmental friendly as it eventually degrades into citric acid and alcohol. Furthermore acethyl triethyl citrate and triacetin has a good hydrolytical stability in the product upon storage and it is an efficient bleach activator. Finally ATC provides a good building capacity to the laundry additive. Alternatively, the bleaching system may comprise peroxyacids of, for example, the amide, imide, or sulfone type. The bleaching system may also comprise peracids such as 6-(phthaloylamino)percapronic acid (PAP). The bleaching system may also include a bleach catalyst.

Other ingredients of the detergent composition, which are all well-known in art, include hydrotropes, fabric hueing agents, anti-foaming agents, soil release polymers, anti-redeposition agents etc.

### Methods and uses

The inventors of the present invention have provided a specific advantageous liquid enzyme formulation, which is particularly useful for making enzymatic water soluble films, and products made from such films.

Accordingly, in a first aspect, the present invention provides the use of a liquid enzyme formulation comprising more than 5% (w/w) active enzyme protein and a ratio of polyol to active enzyme of less than 10, for preparing an enzymatic water soluble film; wherein the polyol has less than 10 carbons and a molecular weight less than 500 g/mol.

In an embodiment, the liquid enzyme formulation comprises more than 6%, preferably more than 8%, more preferably more than 10%, more preferably more than 12%, more preferably more than 15%, even more preferably more than 20%, and most preferably more than 25% (w/w) active enzyme protein. The active enzyme protein (the enzyme) may be a protease, an amylase, a lipase, a cutinase, a mannase, a pectate lyase, a cellulase, or an oxidoreductase, such as a laccase or peroxidase; or mixtures thereof. In a preferred embodiment, the enzyme includes, or consists of, a protease and the liquid enzyme formulation includes CaCl₂.

In another embodiment, the ratio of polyol to active enzyme is less than 9, preferably less than 8, more preferably less than 7, most preferably less than 6, and in particular less than 5.

In another embodiment, the amount of polyol is less than 50% (w/w) of the liquid enzyme formulation, preferably less than 40% (w/w), more preferably less than 30% (w/w), most preferably less than 20% (w/w), and in particular less than 10% (w/w).

In another embodiment, the polyol is glycerol, propylene glycol, sorbitol, or ethylene glycol.

In another embodiment, the enzymatic water soluble film comprises PVA or co-polymers thereof, and/or PEO or co-polymers thereof. Preferably, the enzymatic water soluble film comprises more than 5% (w/w) PVA, preferably more than 10% (w/w) PVA, most preferably more than 25% (w/w) PVA, and in particular more than 50% (w/w) PVA.

In a preferred embodiment, the use according to the invention further includes forming a unit dose product with the enzymatic water soluble film. Preferably, the unit dose product is a detergent unit dose product, which includes a detergent composition, such as a laundry or dish wash detergent composition. Preferably, the laundry or dish wash detergent composition is a liquid detergent composition.

In another aspect, the invention provides a method for preparing a detergent unit dose product, comprising:
a) forming an enzymatic water soluble film from a liquid enzyme formulation comprising more than 5% (w/w) active enzyme protein and a ratio of polyol to active enzyme of less than 10; and
b) encapsulating a laundry or dish wash detergent unit dose in the enzymatic water soluble film. Preferably, the laundry or dish wash detergent composition is a liquid detergent composition.

The liquid enzyme formulation is used to form the water soluble film, as described above.

In an embodiment, the liquid enzyme formulation comprises more than 6%, preferably more than 8%, more preferably more than 10%, more preferably more than 12%, more preferably more than 15%, even more preferably more than 20%, and most preferably more than 25% (w/w) active enzyme protein. The active enzyme protein (the enzyme) may be a protease, an amylase, a lipase, a cutinase, a mannase, a pectate lyase, a cellulase, or an oxidoreductase, such as a laccase or peroxidase; or mixtures thereof. In a preferred embodiment, the enzyme includes, or consists of, a protease and the liquid enzyme formulation includes CaCl₂.

In another embodiment, the ratio of polyol to active enzyme is less than 9, preferably less than 8, more preferably less than 7, most preferably less than 6, and in particular less than 5.

In another embodiment, the amount of polyol is less than 50% (w/w) of the liquid enzyme formulation, preferably less than 40% (w/w), more preferably less than 30% (w/w), most preferably less than 20% (w/w), and in particular less than 10% (w/w).

In an embodiment, the polyol is glycerol, propylene glycol, sorbitol, or ethylene glycol.

In another embodiment, the enzymatic water soluble film comprises PVA or co-polymers thereof, and/or PEO or co-polymers thereof. Preferably, the enzymatic water soluble film comprises more than 5% (w/w) PVA, preferably more than 10% (w/w) PVA, most preferably more than 25% (w/w) PVA, and in particular more than 50% (w/w) PVA.

The present invention is further described by the following examples that should not be construed as limiting the scope of the invention.

### EXAMPLE 1

A subtilisin protease was fermented and purified using flocculation and filtration. The dilute enzyme solution was concentrated using ultra filtration to approximately 20% active enzyme protein, and diluted adding monopropylene glycol (MPG) to a concentration of 21%. The final enzyme formulation thus contained 16.5% active protein and 21% MPG. The weight ratio of polyol to active enzyme was 1.27.

### EXAMPLE 2

An alpha amylase was fermented and purified using flocculation and filtration. The dilute enzyme solution was concentrated using ultra filtration and vacuum evaporation to approximately 10% active enzyme protein, and diluted adding monopropylene glycol (MPG) to a concentration of 20%. The final enzyme formulation thus contained 8.3% active protein and 20% MPG. The weight ratio of polyol to active enzyme was 2.4.

### EXAMPLE 3

A lipase was fermented and purified using flocculation and filtration. The dilute enzyme solution was concentrated using ultra filtration to approximately 10% active enzyme protein, and diluted adding monopropylene glycol (MPG) to a concentration of 20%. The final enzyme formulation thus contained 8.3% active protein and 20% MPG. The weight ratio of polyol to active enzyme was 2.4.

## Claims

1. Use of a liquid enzyme formulation comprising more than 5% (w/w) active enzyme protein and a ratio of polyol to active enzyme of less than 10, for preparing an enzymatic water soluble film; wherein the polyol has less than 10 carbons and a molecular weight less than 500 g/mol.

2. The use according to claim 1, wherein the liquid enzyme formulation comprises more than 10% (w/w) active enzyme protein, preferably more than 15% (w/w) active enzyme protein, more preferably more than 20% (w/w) active enzyme protein, and most preferably more than 25% (w/w) active enzyme protein.

3. The use according to claims 1 or 2, wherein the ratio of polyol to active enzyme is less than 9, preferably less than 8, more preferably less than 7, most preferably less than 6, and in particular less than 5.

4. The use according to any of claims 1-3, wherein the amount of polyol is less than 50% (w/w) of the liquid enzyme formulation, preferably less than 40% (w/w), more preferably less than 30% (w/w), most preferably less than 20% (w/w), and in particular less than 10% (w/w).

5. The use according to any of claims 1-4, wherein the polyol is glycerol, propylene glycol, sorbitol, or ethylene glycol.

6. The use according to any of claims 1-5, wherein the enzymatic water soluble film comprises PVA or co-polymers thereof, and/or PEO or co-polymers thereof.

7. The use according to any of claims 1-6, wherein the enzymatic water soluble film comprises more than 5% (w/w) PVA, preferably more than 10% (w/w) PVA, most preferably more than 25% (w/w) PVA, and in particular more than 50% (w/w) PVA.

8. The use according to any of claims 1-7, wherein the active enzyme protein includes a protease and the liquid enzyme formulation includes CaCl₂.

9. The use according to any of claims 1-8, which further includes forming a unit dose product with the enzymatic water soluble film.

10. The use according to claim 9, wherein the unit dose product is a detergent unit dose product, which includes a detergent composition.

11. The use according to claim 10, wherein the detergent composition is a laundry or dish wash detergent composition.

12. A method for preparing a detergent unit dose product, comprising:
a) forming an enzymatic water soluble film from a liquid enzyme formulation comprising more than 5% (w/w) active enzyme protein and a ratio of polyol to active enzyme of less than 10, wherein the polyol has less than 10 carbons and a molecular weight less than 500 g/mol; and
b) encapsulating a laundry or dish wash detergent unit dose in the enzymatic water soluble film.

13. The method of claim 12, wherein the polyol is glycerol, propylene glycol, sorbitol, or ethylene glycol.

14. The method of claims 12 or 13, wherein the enzymatic water soluble film comprises PVA or co-polymers thereof, and/or PEO or co-polymers thereof.

15. The method of any of claims 12-14, wherein the active enzyme protein includes a protease and the liquid enzyme formulation includes CaCl₂.

## Patentansprüche

1. Verwendung einer flüssigen Enzymformulierung, die mehr als 5% (Gew./Gew.) aktives Enzymprotein und ein Verhältnis von Polyol zu aktivem Enzym von weniger als 10 umfasst, zum Herstellen eines enzymatischen wasserlöslichen Films; wobei das Polyol weniger als 10 Kohlenstoffe und ein Molekulargewicht von weniger als 500 g/mol aufweist.

2. Verwendung nach Anspruch 1, wobei die flüssige Enzymformulierung mehr als 10% (Gew./Gew.) aktives Enzymprotein, bevorzugt mehr als 15% (Gew./Gew.) aktives Enzymprotein, stärker bevorzugt mehr als 20% (Gew./Gew.) aktives Enzymprotein, und am stärksten bevorzugt mehr als 25% (Gew./Gew.) aktives Enzymprotein umfasst.

3. Verwendung nach Ansprüchen 1 oder 2, wobei das Verhältnis von Polyol zu aktivem Enzym weniger als 9, bevorzugt weniger als 8, stärker bevorzugt weniger als 7, am stärksten bevorzugt weniger als 6, und insbesondere weniger als 5 beträgt.

4. Verwendung nach einem beliebigen der Ansprüche 1-3, wobei die Menge an Polyol weniger als 50% (Gew./Gew.) der flüssigen Enzymformulierung, bevorzugt weniger als 40% (Gew./Gew.), stärker bevorzugt weniger als 30% (Gew./Gew.), am stärksten bevorzugt weniger als 20% (Gew./Gew.), und insbesondere weniger als 10% (Gew./Gew.) beträgt.

5. Verwendung nach einem beliebigen der Ansprüche 1-4, wobei das Polyol Glycerin, Propylenglycol, Sorbitol oder Ethylenglycol ist.

6. Verwendung nach einem beliebigen der Ansprüche 1-5, wobei der enzymatische wasserlösliche Film PVA oder Copolymere davon und/oder PEO oder Copolymere davon umfasst.

7. Verwendung nach einem beliebigen der Ansprüche 1-6, wobei der enzymatische wasserlösliche Film mehr als 5% (Gew./Gew.) PVA, bevorzugt mehr als 10% (Gew./Gew.) PVA, am stärksten bevorzugt mehr als 25% (Gew./Gew.) PVA, und insbesondere mehr als 50% (Gew./Gew.) PVA umfasst.

8. Verwendung nach einem beliebigen der Ansprüche 1-7, wobei das aktive Enzymprotein eine Protease einschließt, und die flüssige Enzymformulierung CaCl₂ einschließt.

9. Verwendung nach einem beliebigen der Ansprüche 1-8, die des Weiteren Bilden eines Einheitsdosisprodukts mit dem enzymatischen wasserlöslichen Film einschließt.

10. Verwendung nach Anspruch 9, wobei das Einheitsdosisprodukt ein Detergens-Einheitsdosisprodukt ist, das eine Detergenszusammensetzung einschließt.

11. Verwendung nach Anspruch 10, wobei die Detergenszusammensetzung eine Wäsche- oder Geschirrspül-Detergenszusammensetzung ist.

12. Verfahren zum Herstellen eines Detergens-Einheitsdosisprodukts, umfassend:
a) Bilden eines enzymatischen wasserlöslichen Films aus einer flüssigen Enzymformulierung, die mehr als 5% (Gew./Gew.) aktives Enzymprotein und ein Verhältnis von Polyol zu aktivem Enzym von weniger als 10 umfasst, wobei das Polyol weniger als 10 Kohlenstoffe und ein Molekulargewicht von weniger als 500 g/mol aufweist; und
b) Verkapseln einer Wäsche- oder Geschirrspül-Detergenseinheitsdosis im enzymatischen wasserlöslichen Film.

13. Verfahren nach Anspruch 12, wobei das Polyol Glycerin, Propylenglycol, Sorbitol oder Ethylenglycol ist.

14. Verfahren nach Ansprüchen 12 oder 13, wobei der enzymatische wasserlösliche Film PVA oder Copolymere davon und/oder PEO oder Copolymere davon umfasst.

15. Verfahren nach einem beliebigen der Ansprüche 12-14, wobei das aktive Enzymprotein eine Protease einschließt, und die flüssige Enzymformulierung CaCl₂ einschließt.

## Revendications

1. Utilisation d'une formulation enzymatique liquide comprenant plus de 5 % (p/p) de protéine enzymatique active et un rapport du polyol à l'enzyme active inférieur à 10, pour la préparation d'un film enzymatique hydrosoluble ; dans laquelle le polyol a moins de 10 carbones et un poids moléculaire inférieur à 500 g/mol.

2. Utilisation selon la revendication 1, dans laquelle la formulation enzymatique liquide comprend plus de 10 % (p/p) de protéine enzymatique active, de préférence plus de 15 % (p/p) de protéine enzymatique active, plus préférablement plus de 20 % (p/p) de protéine enzymatique active, et de manière préférée entre toutes plus de 25 % (p/p) de protéine enzymatique active.

3. Utilisation selon la revendication 1 ou 2, dans laquelle le rapport du polyol à l'enzyme active est inférieur à 9, de préférence inférieur à 8, plus préférablement inférieur à 7, de manière préférée entre toutes inférieur à 6, et en particulier inférieur à 5.

4. Utilisation selon l'une quelconque des revendications 1 à 3, dans laquelle la quantité de polyol est inférieure à 50 % (p/p) de la formulation enzymatique liquide, de préférence inférieure à 40 % (p/p), plus préférablement inférieure à 30 % (p/p), de manière préférée entre toutes inférieure à 20 % (p/p), et en particulier inférieure à 10 % (p/p).

5. Utilisation selon l'une quelconque des revendications 1 à 4, dans laquelle le polyol est le glycérol, le propylène glycol, le sorbitol, ou l'éthylène glycol.

6. Utilisation selon l'une quelconque des revendications 1 à 5, dans laquelle le film enzymatique hydrosoluble comprend du PVA ou des copolymères de celui-ci, et/ou du PEO ou des copolymères de celui-ci.

7. Utilisation selon l'une quelconque des revendications 1 à 6, dans laquelle le film enzymatique hydrosoluble comprend plus de 5 % (p/p) de PVA, de préférence plus de 10 % (p/p) de PVA, de manière préférée entre toutes plus de 25 % (p/p) de PVA, et en particulier plus de 50 % (p/p) de PVA.

8. Utilisation selon l'une quelconque des revendications 1 à 7, dans laquelle la protéine enzymatique active contient une protéase et la formulation enzymatique liquide contient du CaCl₂.

9. Utilisation selon l'une quelconque des revendications 1 à 8, qui comprend en outre la formation d'un produit de type dose unitaire à l'aide du film enzymatique hydrosoluble.

10. Utilisation selon la revendication 9, dans laquelle le produit de type dose unitaire est un produit de type dose unitaire détergente, qui contient une composition détergente.

11. Utilisation selon la revendication 10, dans laquelle la composition détergente est une composition détergente pour le lavage du linge ou de la vaisselle.

12. Méthode de préparation d'un produit de type dose unitaire détergente, comprenant :
a) la formation d'un film enzymatique hydrosoluble à partir d'une formulation enzymatique liquide comprenant plus de 5 % (p/p) de protéine enzymatique active et un rapport du polyol à l'enzyme active inférieur à 10, dans laquelle le polyol a moins de 10 carbones et un poids moléculaire inférieur à 500 g/mol ; et
b) l'encapsulation d'une dose unitaire détergente pour le lavage du linge ou de la vaisselle dans le film enzymatique hydrosoluble.

13. Méthode selon la revendication 12, dans laquelle le polyol est le glycérol, le propylène glycol, le sorbitol, ou l'éthylène glycol.

14. Méthode selon les revendications 12 ou 13, dans laquelle le film enzymatique hydrosoluble comprend du PVA ou des copolymères de celui-ci, et/ou du PEO ou des copolymères de celui-ci.

15. Méthode selon l'une quelconque des revendications 12 à 14, dans laquelle la protéine enzymatique active contient une protéase et la formulation enzymatique liquide contient du CaCl₂.
